(19) Europäisches Patentamt
European Patent Office
Office européen des brevets

(11) **EP 4 664 392 A1**

(12) **EUROPEAN PATENT APPLICATION**
published in accordance with Art. 153(4) EPC

(43) Date of publication:
**17.12.2025 Bulletin 2025/51**

(21) Application number: **23921296.2**

(22) Date of filing: **10.11.2023**

(51) International Patent Classification (IPC):
**G06T 3/18** (2024.01)

(52) Cooperative Patent Classification (CPC):
**G06T 3/18**

(86) International application number:
**PCT/JP2023/040651**

(87) International publication number:
**WO 2024/166475 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.02.2023 JP 2023017166**

(71) Applicant: **Marketvision Co.,Ltd.**
**Tokyo 102-0075 (JP)**

(72) Inventor: **SHIN Dongjoo**
**Tokyo 102-0075 (JP)**

(74) Representative: **Betten & Resch**
**Patent- und Rechtsanwälte PartGmbB**
**Maximiliansplatz 14**
**80333 München (DE)**

(54) **INFORMATION PROCESSING SYSTEM**

(57)     An object is to provide an information processing system that performs correction processing on image information.

An information processing system that corrects image information photographed by a photographing device to a directly facing position, the information processing system including: an image information input acceptance processing unit that accepts an input of image information to be corrected; a sensor information input acceptance processing unit that accepts an input of information on a pitch angle and a roll angle of the photographing device or the information processing device and distance information to an arbitrary point in a photographing object; a correction processing unit that performs correction processing on the image information; and an output processing unit that outputs the image information on which the correction processing has been performed, in which the correction processing unit calculates a regression line of a point group including a plurality of the points by using the distance information and the information on a pitch angle and a roll angle, and estimates information on a yaw angle of the photographing device or the information processing device, and deforms the image information using the information on the estimated yaw angle so as to be at a position facing the photographing device.

```
┌─────────────────────────┬──────────────────────────┬─────────────────────┐
│ IMAGE INFORMATION INPUT │ SENSOR INFORMATION INPUT │ OUTPUT PROCESSING   │
│ ACCEPTANCE PROCESSING   │ ACCEPTANCE PROCESSING    │ UNIT                │
│ UNIT                    │ UNIT                     │                     │
│          20             │          22              │          24         │
│ IMAGE INFORMATION       │ CORRECTION               │                     │
│ STORAGE UNIT            │ PROCESSING UNIT          │                     │
│          21             │          23              │                     │
└─────────────────────────┴──────────────────────────┴─────────────────────┘
```

PORTABLE COMMUNICATION TERMINAL 2

INFORMATION PROCESSING SYSTEM 1

Fig.1

EP 4 664 392 A1

## Description

Technical Field

The present invention relates to an information processing system that performs correction processing on image information.

Background Art

In various stores such as a convenience store and a supermarket, goods on sale are generally placed on display shelves and sold. Therefore, by displaying a plurality of goods on the display shelf, even if one of the goods is purchased, another person can purchase the same goods. In addition, goods, a large number of which are arranged in conspicuous positions, attract attention, and a relationship of superiority and inferiority in terms of competition arises in that the goods sell more than other goods. Therefore, it is important in terms of goods sales strategy to manage where and how many goods are displayed on the display shelf and the price of the goods.

Therefore, by photographing the display shelf with a photographing device such as a camera and automatically recognizing the object shown in the image information, it is possible to grasp the display position and the number of the goods and the price described in the displayed goods or price tag.

In a case where an object appearing in image information captured by a photographing device such as a camera is automatically recognized, an optical axis of a lens of the photographing device and a surface of the object become perpendicular by photographing the object from a position where the object directly faces. Therefore, distortion does not occur in the photographed image information, and accuracy of automatic recognition is improved. Therefore, in the case of performing the automatic recognition, it is ideally preferable to photograph the object from a position facing the object.

However, a photographing angle when an object is photographed by the photographing device is generally limited by various photographing conditions such as a space of a photographing place and presence of an obstacle. For example, in a case where an object to be photographed is a display shelf, if a width of a passage between the display shelves on which goods are displayed is narrow, it is difficult to photograph the entire display shelf from a position facing the display shelf. By photographing the display shelf at a depression angle or an elevation angle or photographing the display shelf from a direction shifted to the left and right, distortion occurs in photographed image information.

In general, automatic recognition is performed by comparing feature amounts of image information between image information as a sample and photographed image information. Therefore, in a case where automatic recognition is performed on image information photographed from a position not facing the display shelf, since the image information is photographed from a photographing angle different from that of the image information as a sample photographed from the position facing the display shelf, the recognition accuracy of the automatic recognition of the object decreases as the distortion in the photographed image information increases.

This also applies to a case where deep learning is used as the automatic recognition. When the image information as the teacher data and the image information as the processing target are different from each other in the photographing angle, the recognition accuracy of the automatic recognition of the object decreases as in the case of the comparison of the image feature amounts. Since the image information as the teacher data and the image information as the processing target are usually cut out in a rectangle by vertical and horizontal line segments, it is effective to cause the image information itself to vertically face the display shelf in order to exclude information other than the goods in order to improve accuracy.

Due to such a problem, so-called trapezoid correction processing is known in order to correct a distorted image to image information photographed from a facing position, and is disclosed in, for example, Patent Literature 1 below.

Citation List

Patent Literature

Patent Literature 1: JP 2018-194792 A

Summary of Invention

Technical Problem

In the case of performing the conventional correction processing, the operator manually performs an operation of manually designating the vertex such as the trapezoid correction processing, and thus, a work load of the operator is generated. In addition, since the work is performed manually, processing time is also required. Therefore, it is required to automate such correction processing.

In addition, in a case where a display shelf is photographed, in order to perform photographing in a store, image information photographed is uploaded to a server, and in a case where the operator cannot appropriately photograph even if the operator performs work, it is necessary to visit the store again and perform photographing. Therefore, it is sufficient that the correction processing can be performed on the image information photographed on the spot, but the conventional processing is not suitable for being performed on a portable communication terminal such as a smartphone on the spot because an operator intervenes or a processing load is large.

Therefore, there is a demand for image correction processing that can be processed even by a portable communication terminal that has a small processing load and does not have high processing capability such as a smartphone.

Solution to Problem

In view of the above problems, the present inventor has invented an information processing system that performs correction processing on image information.

The first invention is an information processing system that corrects image information photographed by a photographing device to a directly facing position, the information processing system including: an image information input acceptance processing unit that accepts an input of image information to be corrected; a sensor information input acceptance processing unit that accepts an input of information on a pitch angle and a roll angle of the photographing device or the information processing device and distance information to an arbitrary point in a photographing object; a correction processing unit that performs correction processing on the image information; and an output processing unit that outputs the image information on which the correction processing has been performed, in which the correction processing unit calculates a regression line of a point group including a plurality of the points by using the distance information and the information on the pitch angle and the roll angle, and estimates information on a yaw angle of the photographing device or the information processing device, and deforms the image information using the information on the estimated yaw angle so as to be at a position facing the photographing device.

By executing the processing of the present invention, it is possible to perform image correction processing that can be processed even by a portable communication terminal with a small processing load and a low processing capability such as a smartphone.

In the above-described invention, the correction processing unit may be configured as an information processing system that converts distance information to an arbitrary point in a photographing object into three-dimensional information, rotates the point on the basis of information on a pitch angle and a roll angle, and calculates a regression line of a point group when the point group including the point is projected on a two-dimensional plane to estimate the information on a yaw angle.

The correction processing is preferably performed as in these inventions.

In the above-described invention, the correction processing unit may be configured as an information processing system that divides an object plane on which the photographing object is photographed into a matrix having a predetermined size, extracts distance information of the point in each matrix, and converts the extracted distance information at the point into three-dimensional information, rotates the point on the basis of the information of the pitch angle and the roll angle, and calculates a regression line of a point group when the point group including the point is projected on a two-dimensional plane to estimate the information of the yaw angle.

With the configuration as in the present invention, the regression line can be accurately calculated even in the case of the photographing object having many irregularities, so that the accuracy of the correction processing can be improved.

In the above-described invention, the correction processing unit may be configured as an information processing system that changes a weighting of a point near an end portion of an object plane on which the photographing object is photographed to a weighting lower than a weighting of a point near a center and calculates the regression line.

In the above-described invention, the correction processing unit may be configured as an information processing system that divides the acquisition section of the point group in the predetermined axial direction of the object plane and changes the weighting of the number of points in the outer section.

In the above-described invention, the correction processing unit may be configured as an information processing system that divides the acquisition section of the point group in the predetermined axial direction of the object plane, and changes the weighting of the number of points as being positioned at the outer edge portion in the outer section.

Normally, there is a case where an object different from the original photographing object appears near the left and right end portions of the image information. When the vicinity of the left and right end portions protrudes or is recessed, the regression line is affected. However, with the configuration as in the present invention, the regression line can be accurately calculated, so that the accuracy of the correction processing can be improved.

The information processing system of the first invention can be implemented by causing an information processing device to read and execute the program of the present invention. That is, there is provided an information processing program causing an information processing device to function as: an image information input acceptance processing unit that accepts an input of image information to be corrected; a sensor information input acceptance processing unit that accepts an input of information on a pitch angle and a roll angle of a photographing device or the information processing device and distance information to an arbitrary point in a photographing object; a correction processing unit that performs correction processing on the image information; and an output processing unit that outputs the image information on which the correction processing has been performed, in which the correction processing unit calculates a regression line of a point group including a plurality of the points by using the distance information and the information on the pitch angle and the roll angle, and estimates information on a yaw angle of the photographing device or the information processing device, and deforms the image information using the information on the estimated yaw angle so as to be at a position facing the photographing device.

Advantageous Effects of Invention

By using the information processing system of the present invention, it is possible to perform correction processing on image information even in a portable communication terminal with low processing capability such as a smartphone.

Brief Description of Drawings

Fig. 1 is a block diagram schematically illustrating an example of a configuration of an information processing system of the present invention.

Fig. 2 is a block diagram schematically illustrating an example of a configuration of a correction processing unit in the information processing system of the present invention.

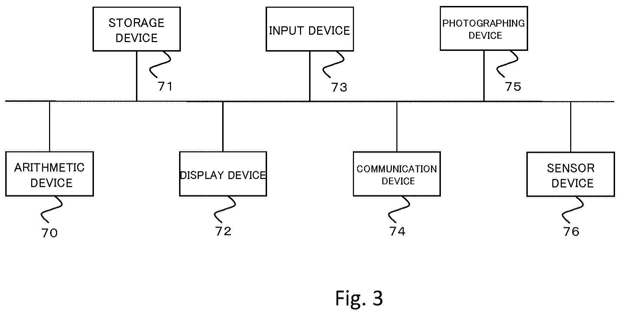

Fig. 3 is a block diagram schematically illustrating an example of a hardware configuration of a computer used in the information processing system of the present invention.

Fig. 4 is a flowchart illustrating an example of an entire processing process in the information processing system of the present invention.

Fig. 5 is an example of image information (image information before correction) to be input.

Fig. 6 is a diagram schematically illustrating a relationship between an object plane and a three-dimensional space.

Fig. 7 is an example of image information (corrected image information) to be output.

Fig. 8 is a front view of a state in which a point group after rotation is mapped on a vertical plane.

Fig. 9 is a top view of a state in which a point group after rotation is mapped on a horizontal plane.

Fig. 10 is a diagram schematically illustrating processing in an angle estimation processing unit.

Fig. 11 is a diagram schematically illustrating processing in an image deformation processing unit.

Fig. 12 is a diagram illustrating a shift of distance information in a case where a photographing object having many irregularities is photographed in Example 2.

Fig. 13 is a diagram schematically illustrating random selection of a point group from a matrix among point groups on which distance information is plotted in Example 2.

Fig. 14 is a diagram schematically illustrating image information in a case where irregularities are reflected on the left and right of an original photographing target and an abnormal value of distance information due to the image information in Example 3.

Fig. 15 is a diagram schematically illustrating an example of processing of Example 3.

Description of Embodiments

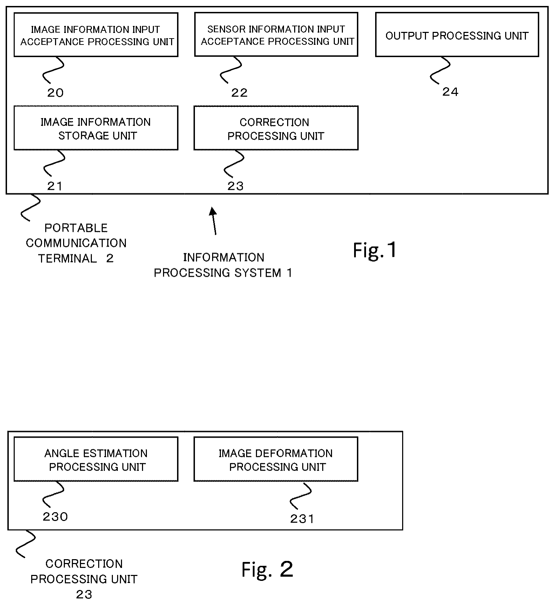

Fig. 1 illustrates a block diagram of an example of an entire processing function of an information processing system 1 of the present invention. The information processing system 1 preferably functions as a portable communication terminal 2 such as a smartphone having the function of a photographing device 75.

The portable communication terminal 2 is an information processing device (computer) having the function of a portable photographing device 75 such as a smartphone or a tablet computer. It may be a laptop computer.

Fig. 2 schematically illustrates an example of a hardware configuration of the portable communication terminal 2 in the information processing system 1. The portable communication terminal 2 includes an arithmetic device 70 such as a CPU that executes arithmetic processing of a program, a storage device 71 such as a RAM or a hard disk that stores information, a display device 72 such as a display that displays information, an input device 73 that can input information, a communication device 74 that transmits and receives a processing result of the arithmetic device 70 and information stored in the storage device 71 via a network such as the Internet or a LAN, a photographing device 75 such as a camera, and various sensor devices 76.

When the portable communication terminal 2 includes a touch panel display, the display device 72 and the input device 73 may be integrally configured. The touch panel display is often used in, for example, a portable communication terminal 2 such as a tablet computer or a smartphone, but is not limited thereto.

The touch panel display is a device in which the functions of the display device 72 and the input device 73 are integrated in that an input can be directly performed by a predetermined input device (such as a pen for a touch panel), a finger, or the like on the display.

The photographing device 75 may be any device that photographs image information with visible light or the like.

Examples of the sensor device 76 include a sensor that detects a pitch angle and a roll angle of the portable communication terminal 2 or the photographing device 75, and a distance measuring sensor that measures a distance from the photographing device 75 to the photographing object.

The functions of the respective means in the present invention are only logically distinguished, and the respective means may physically or practically form the same region. In the processing in each means of the present invention, the processing order can be appropriately changed. A part of the processing may be omitted. For example, processing of determining a viewpoint direction to be described later can be omitted. In this case, it is possible to execute processing on the image information for which the processing of determining the viewpoint direction has not been performed.

The information processing system 1 includes an image information input acceptance processing unit 20, an image information storage unit 21, a sensor information input acceptance processing unit 22, a correction processing unit 23, and an output processing unit 24.

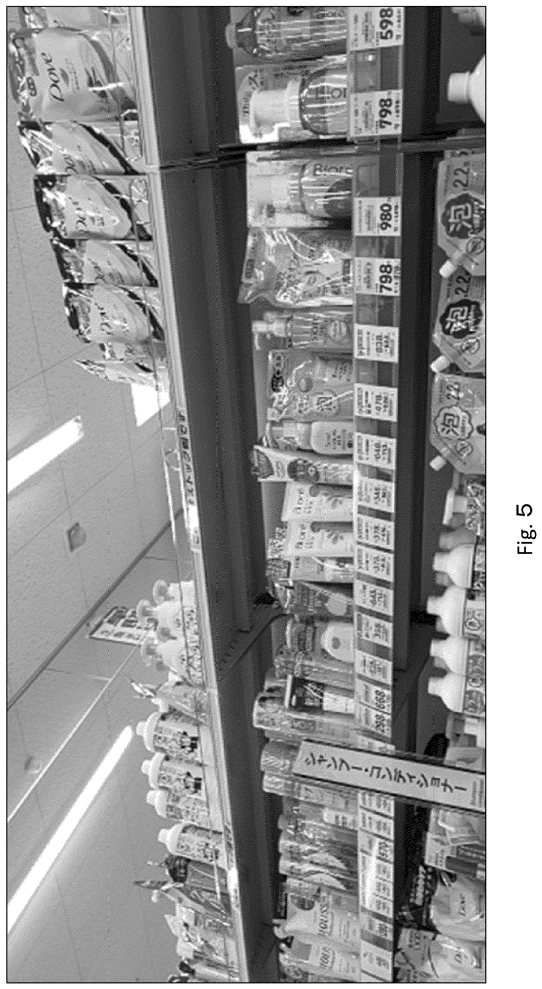

The image information input acceptance processing unit 20 accepts input of image information photographed by the photographing device 75 of the portable communication terminal 2, and stores the image information in an image information storage unit 21 to be described later. For example, an input of image information of a display shelf of a store is accepted and stored in the image information storage unit 21. Fig. 5 illustrates an example of image information accepted from the photographing device 75 of the portable communication terminal 2. Fig. 5 illustrates image information photographed on a display shelf of a store, and this is image information to be corrected. In the case of photographing the display shelf of the store as illustrated in Fig. 5, there is a case where it is difficult to secure a distance between the display shelf as a photographing target and the photographing device 75 due to a circumstance that another display shelf is positioned behind the photographer and the passage is narrow. In addition, since the display shelf is positioned above or below the line of sight of the photographer, photographing is often performed at an elevation angle or a depression angle. Therefore, photographing cannot be performed from the facing position. The image information photographed according to the present invention is corrected as if the photographing was performed from the facing position. Note that the present invention can be similarly applied not only to image information photographed at the elevation angle or the depression angle but also to image information photographed from the left-right direction and the like.

The image information storage unit 21 stores the image information accepted from the photographing device 75.

The sensor information input acceptance processing unit 22 accepts an input of the information from a sensor that detects a pitch angle and a roll angle of the portable communication terminal 2 or the photographing device 75. Furthermore, an input of distance information between the photographing device 75 and the photographing object is accepted from a sensor (distance measuring sensor) that measures the distance to the photographing object. As the distance information, distance information from the photographing device 75 to each point to the photographing object is acquired.

The correction processing unit 23 accepts an input by the image information input acceptance processing unit 20, and performs correction processing on the image information stored in the image information storage unit 21 so as to be a facing position. The correction processing unit 23 regards the front surface of the photographing object as a vertical rectangle (including a square) in the three-dimensional space (this surface is referred to as an object plane), and performs correction processing by estimating a positional relationship between the portable communication terminal 2 and the object plane in the three-dimensional space using the sensor information accepted by the sensor information input acceptance processing unit 22. The correction processing unit 23 includes an angle estimation processing unit 230 and an image deformation processing unit 231.

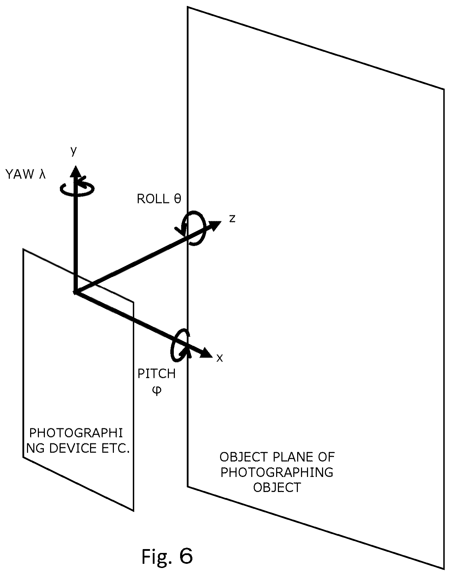

The angle estimation processing unit 230 converts the distance information to each point of the photographing object accepted by the sensor information input acceptance processing unit 22 into three-dimensional information, and rotates the point group on the basis of the roll angle and the pitch angle. Since the object plane is perpendicular, the result of the rotation is a plane that is perpendicular to the xz plane, approximately as shown in Fig. 6. Then, by calculating a regression line on the xz plane of these point groups, a perpendicular line drawn from the photographing device 75 to the line is estimated as the yaw angle.

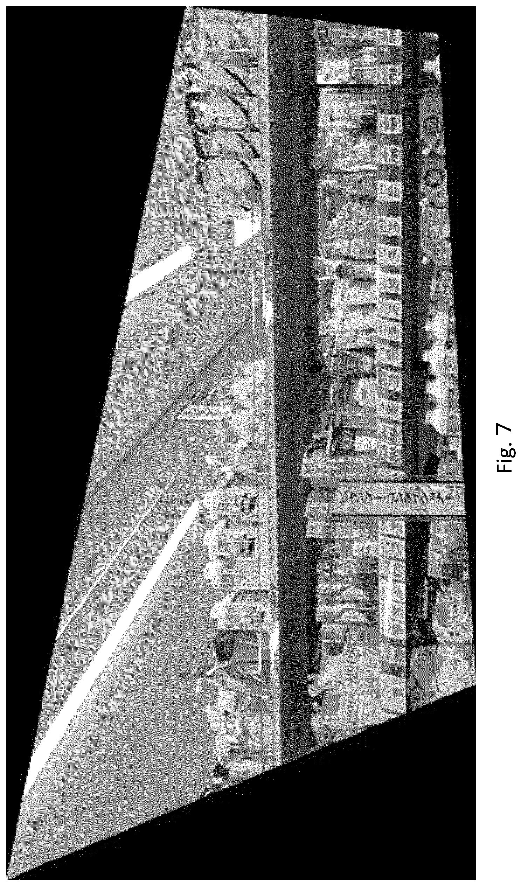

Using the yaw angle estimated by the angle estimation processing unit 230, the image deformation processing unit 231 deforms the image information accepted by the image information input acceptance processing unit 20 and stored in the image information storage unit 21 to be a position facing the photographing device 75. As the shape of the quadrangle of the object plane, four vectors representing the angle of view of the photographing device 75 in the three-dimensional space and having the photographing device 75 as an end point are assumed, and after rotating the vectors on the basis of the roll angle and the pitch angle, input of which being accepted by the sensor information input acceptance processing unit 22, it is only required to calculate four intersections with a vertical surface inclined to the left and right by the yaw angle estimated by the angle estimation processing unit 230. Then, by performing projective transformation processing such as OpenCV on the image information accepted by the image information input acceptance processing unit 20 using the calculated four intersections, it is possible to perform image deformation processing and execute correction processing on the image information from the facing position. Fig. 7 illustrates an example of image information obtained by performing correction processing on the image information of Fig. 5.

The output processing unit 24 outputs the image information corrected by the correction processing unit 23. For example, the corrected image information in Fig. 7 is output.

Example 1

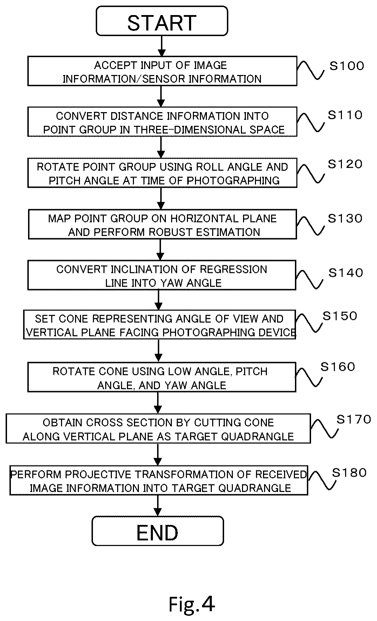

Next, an example of a processing process using the information processing system 1 of the present invention will be described with reference to a flowchart of Fig. 4. In the present example, a case where the information processing system 1 of the present invention performs processing of automatically correcting image information obtained by photographing a display shelf of a store with a camera (photographing device 75) built in a smartphone (portable communication terminal 2) will be described.

First, a person in charge of photographing the display shelf of the store photographs the display shelf (photographing object) of the store using a camera of a smartphone possessed by the person. The image information input acceptance processing unit 20 accepts input of image information photographed by the camera of the smartphone, and stores the image information in the image information storage unit 21 (S100). An example of the image information is illustrated in Fig. 5. The image information in Fig. 5 is photographed upward (elevation angle) from the obliquely downward direction of the display shelf, and is slightly rotated to the left side (the pitch angle is 18.8 degrees upward, and the roll angle is 4.6 degrees counterclockwise).

In addition, the sensor information input acceptance processing unit 22 accepts input of information on the pitch angle and the roll angle of the smartphone or the camera and information on the distance information to each point of the photographing object at the time of photographing the image information by the photographing device 75 measured by the sensor device 76.

As the distance information, an arbitrary number of pieces of distance information, for example, about several tens to hundreds of pieces of distance information may be acquired with respect to the photographing object. Note that the number of places where the distance information is acquired may be any number as long as sufficient accuracy can be obtained.

The angle estimation processing unit 230 in the correction processing unit 23 plots the distance information, input of which is accepted by the sensor information input acceptance processing unit 22, in a three-dimensional space and converts the distance information into a point group in the three-dimensional space (S110). Then, the angle estimation processing unit 230 rotates the point group using the information on the pitch angle and the roll angle, input of which is accepted by the sensor information input acceptance processing unit 22 (S120).

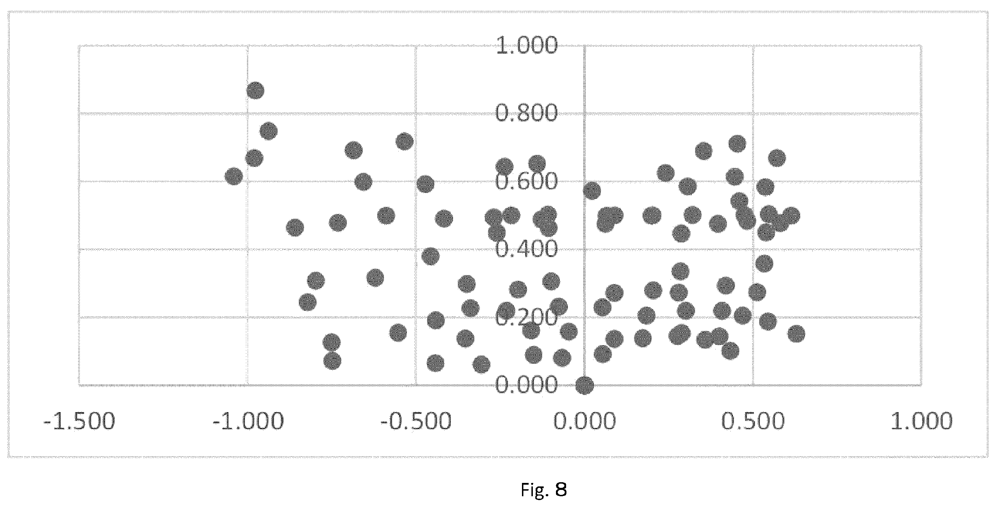

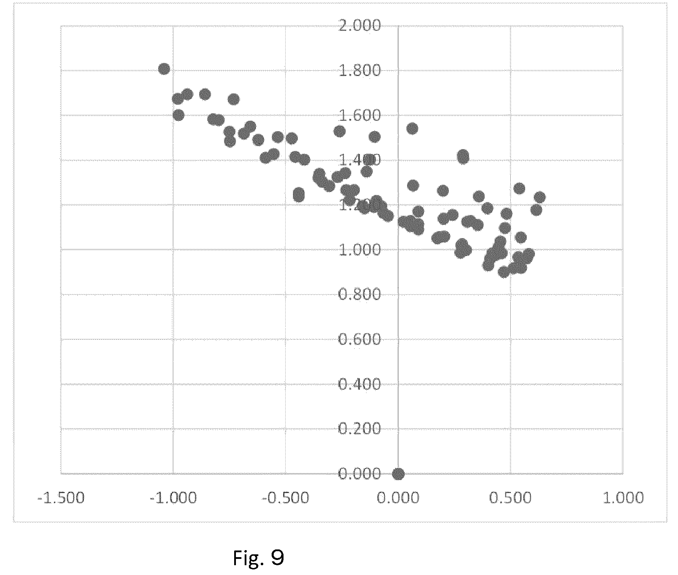

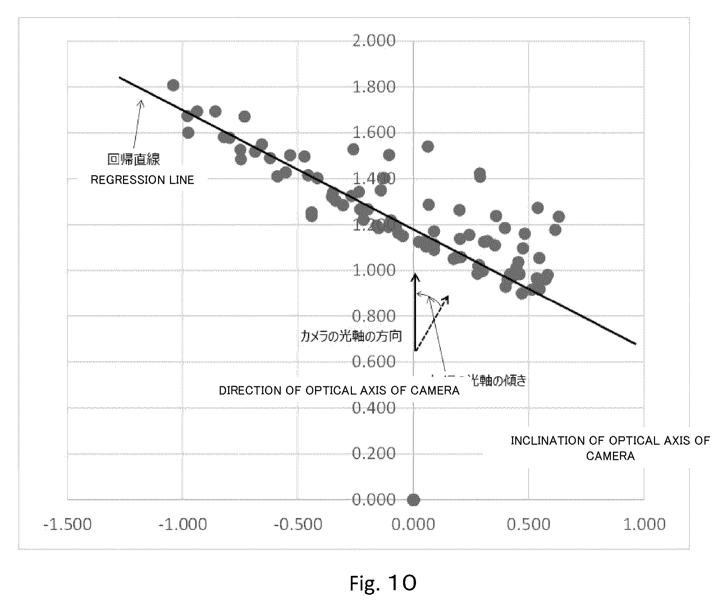

In order to generate corrected image information (trapezoid corrected image information) in which the goods displayed in the display shelf on the object plane are upright and each shelf is horizontal, that is, in order to perform correction so that the object plane of the image information, input of which is accepted by the image information input acceptance processing unit 20, is at a facing position, it is necessary to calculate how much the object plane is inclined from the direction facing the camera. Therefore, the point group after the rotation in S120 is mapped on a horizontal plane (xz plane), and a regression line is calculated using RANSAC or the like which is an algorithm of robust estimation (S130). Fig. 8 is a front view (xy plane in Fig. 6) in a state where the point group after the rotation in S 120 is mapped on a vertical plane, and Fig. 9 is a top view (xz plane in Fig. 6) in a state where the point group after the rotation in S120 is mapped on a horizontal plane. In addition, Fig. 10 schematically illustrates processing in the angle estimation processing unit 230.

Then, an angle (yaw angle) indicating how much the object plane is inclined from the optical axis of the camera may be calculated from the regression line. Specifically, assuming that the inclination of the regression line of the point group is a, the inclination a of the regression line is converted into the yaw angle by calculating Equation 1 (S140). That is, the arc tangent is calculated using the inclination a as an argument.

(Equation 1)

$$\text{Yaw angle} = \text{atan}(a)$$

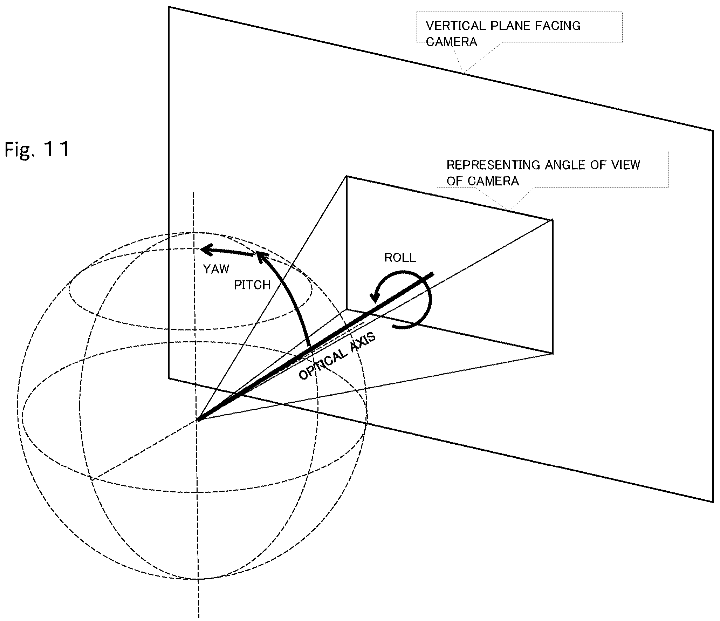

Since the angle estimation processing unit 230 can estimate the yaw angle by the processing as described above, the image deformation processing unit 231 deforms the image information, input of which is accepted by the image information input acceptance processing unit 20, using the estimated yaw angle so as to be a position facing the photographing device 75. This processing is schematically illustrated in Fig. 11.

Since the yaw angle is estimated by the angle estimation processing unit 230, the positional relationship between the camera and the object plane in the three-dimensional space is found, and thus the image deformation processing unit 231 sets four straight lines (vectors) connecting four vertexes formed by the horizontal plane, the camera position, and the angle of view of the camera in the three-dimensional space (S150). Then, the four straight lines (vectors) are rotated using the low angle and the pitch angle input by the sensor information input acceptance processing unit 22 and the yaw angle estimated by the angle estimation processing unit 230 (S160).

The image deformation processing unit 231 calculates a quadrangle of a cross section obtained by cutting the four straight lines rotated in S160 along the object plane as a target quadrangle (S170). The image deformation processing unit 231 subjects the image information, input of which is accepted by the image information input acceptance processing unit 20, to projective transformation with respect to the target quadrangle to generate corrected image information (S180). The image information obtained by performing the correction processing in the correction processing unit 23 on the image information of Fig. 5 is the image information of Fig. 7.

By executing the above processing, the processing of the correction processing unit 23 can be executed.

Then, the output processing unit 24 outputs the image information (for example, Fig. 7) corrected by the correction processing unit 23.

Example 2

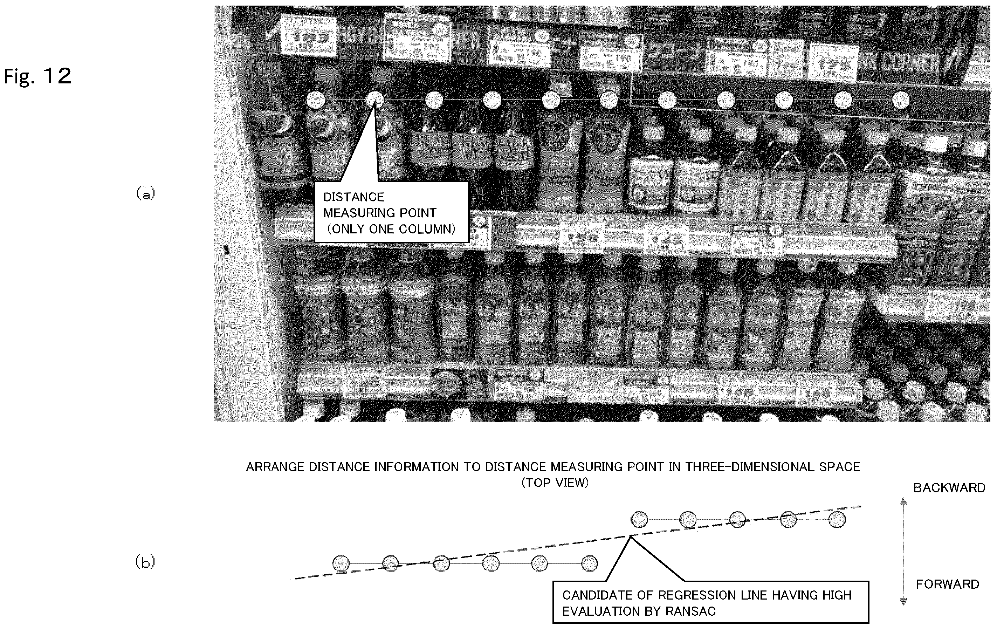

In a case where the photographing object has many irregularities like a display shelf on which goods are displayed, the irregularities of the photographing object has an extremely strong correlation in the horizontal direction as compared with the vertical direction. Therefore, when the left-right direction of the photographing device 75 is slightly deviated from the horizontal direction of the display shelf, a step difference in which the distance information arranged side by side is close to the middle and is far from the middle is likely to occur. If some of such columns are mixed in the acquired distance information, an estimation result inclined with respect to the original object plane is obtained. This is schematically illustrated in Fig. 12. Fig. 12(a) illustrates image information obtained by photographing a display shelf having many irregularities as a photographing object, for example, a display shelf on which goods are displayed. Fig. 12(a) illustrates that the position (point) at which the distance information is acquired may be the position of the goods located on the front side, or the position of the shelf board on the back side without the goods. In this case, the positional relationship of the point group as illustrated in Fig. 12(b) is obtained, and an inclined estimation result is likely to be obtained.

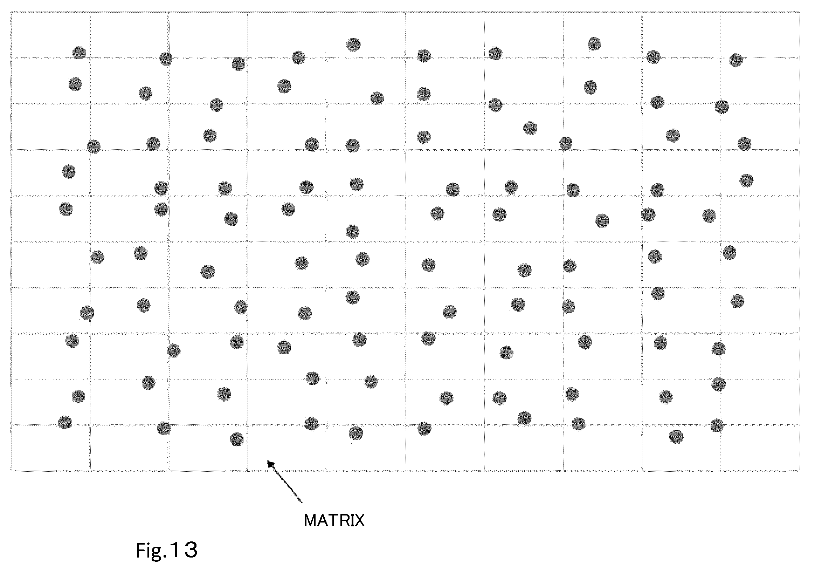

Therefore, in the processing of Example 1, the object plane may be further divided into a matrix having a predetermined size, and distance information of points randomly dispersed in a pseudo manner in each matrix may be acquired. As a result, when the distance information is converted into the point group in the three-dimensional space in S110, the point group can be randomly selected from the matrix among the point groups in which the distance information is plotted. This is schematically illustrated in Fig. 13.

With the above processing, the accuracy of the estimation result can be improved.

Example 3

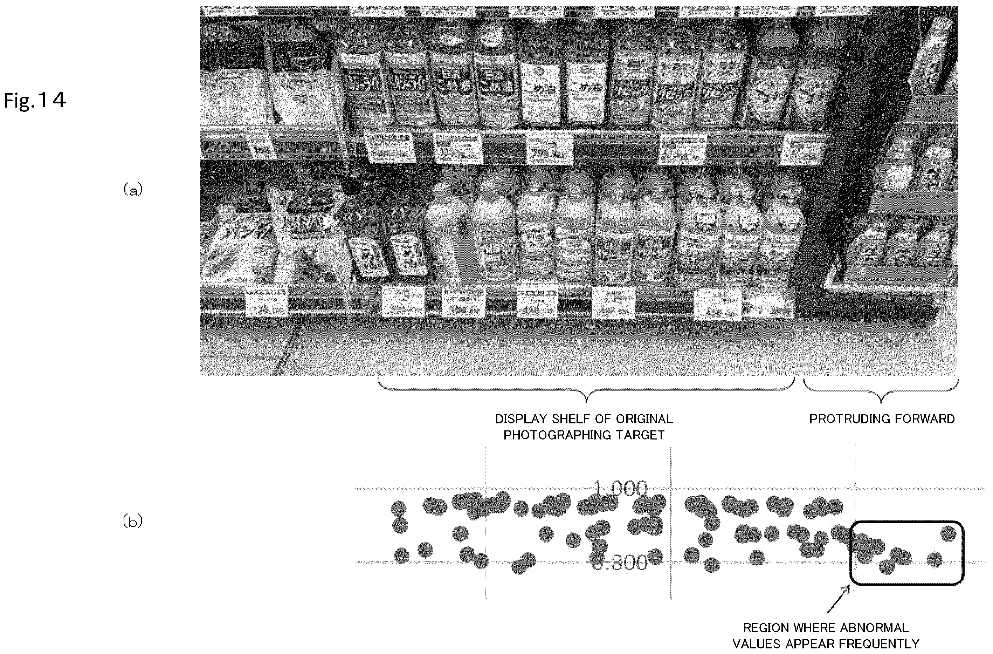

In a case where the photographing object is a display shelf, normally, the person in charge of photographing stands near the center of the display shelf to be photographed, and performs photographing so that the entire right and left sides of the display shelf are accommodated. In that case, usually, there is a possibility that a part of the adjacent display shelf is reflected near the left and right end portions of the photographed image information. An example of the image information indicating this is illustrated in Fig. 14. In the case of such image information, the regression line in S130 may be inclined if the left and right display shelves protrude forward from the display shelf to be originally photographed or are recessed backward. In a case where the photographed image information is in Fig. 14(a), the display shelf reflected on the right side of the display shelf to be originally photographed protrudes forward. Therefore, when the distance information is plotted in a three-dimensional space, an abnormal value occurs on the right side as illustrated in the top view (xz plane) of Fig. 14(b). When these point groups are set as processing targets as they are, the inclination of the regression line is affected.

Therefore, in the processing of Example 1 and Example 2, when the regression line is calculated using processing such as RANSAC, the following processing may be executed.

First, using processing such as RANSAC, a predetermined number of points are randomly selected from the point group after rotation in S120, and a regression line is obtained. Then, for all the point groups, the number of points at which the error from the regression line falls within the threshold is set as an evaluation function, and this operation is repeated a plurality of times, and the regression line having the largest number of points is selected as a final regression line. For example, in the case of obtaining a regression line from a point group of 100 points, sufficient accuracy can be obtained by obtaining a regression line in which three points are selected as a predetermined number of points and performing repetition 500 times.

Furthermore, regarding this evaluation function, in a case where a point on the outer edge portion is selected, it is possible to reduce the influence of irregularities of the display shelf reflected in the vicinity of the left and right end portions by changing the weight to be lowered. As a method of changing the weighting, for example, there is a method of counting 0.5 points instead of 1 point for the point in the outer edge portion.

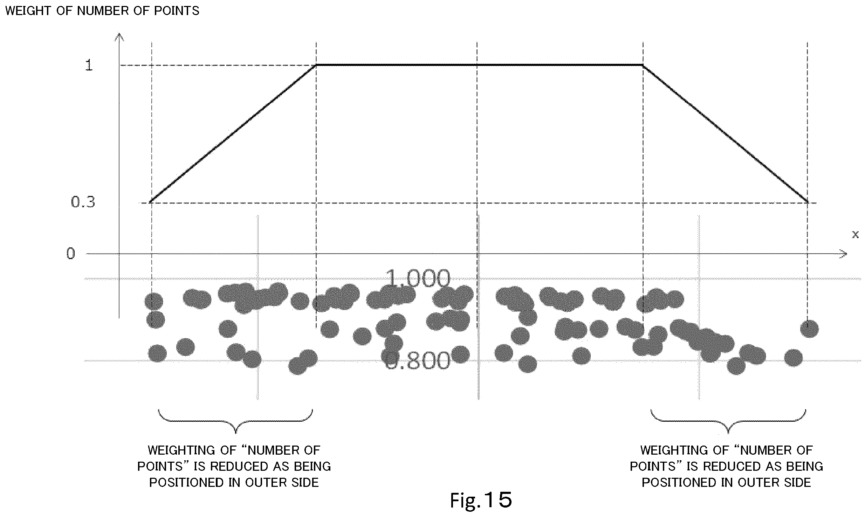

More specifically, for example, as illustrated in Fig. 15, the acquisition section of the point group is divided into a predetermined number, for example, four equal parts in the x-axis direction, and the weighting of the number of points is changed as being positioned at the outer edge portion in the outer section.

In Examples 1 to 3, the order of processing can be arbitrarily changed. In addition, it is possible to add or delete processing without changing the gist of the present invention. Furthermore, since the information processing system 1 of the present invention can execute the image correction processing with a small processing load, the portable communication terminal 2 such as a smartphone or a tablet computer not having a high processing capability is preferable as the information processing device, and the case has been described. However, it goes without saying that the information processing device may be executed by a computer, a server, or the like having a high processing capability.

Industrial Applicability

By using the information processing system 1 of the present invention, it is possible to perform correction processing on image information even in the portable communication terminal 2 having a low processing capability such as a smartphone.

Reference Signs List

| | |
|---|---|
| 1 | Information processing system |
| 2 | Portable communication terminal |
| 20 | Image information input acceptance processing unit |
| 21 | Image information storage unit |
| 22 | Sensor information input acceptance processing unit |
| 23 | Correction processing unit |
| 24 | Output processing unit |
| 70 | Computing device |
| 71 | Storage device |
| 72 | Display device |
| 73 | Input device |
| 74 | Communication device |
| 75 | Photographing device |
| 76 | Sensor device |
| 230 | Angle estimation processing unit |
| 231 | Image deformation processing unit |

**Claims**

1. An information processing system that corrects image information photographed by a photographing device to a directly facing position,
the information processing system comprising:

an image information input acceptance processing unit that accepts an input of image information to be corrected;
a sensor information input acceptance processing unit that accepts an input of information on a pitch angle and a roll angle of the photographing device or an information processing device and distance information to an arbitrary point in a photographing object;
a correction processing unit that performs correction processing on the image information; and
an output processing unit that outputs the image information on which the correction processing has been performed, wherein
the correction processing unit
calculates a regression line of a point group including a plurality of the points by using the distance information and the information on the pitch angle and the roll angle, and estimates information on a yaw angle of the photographing device or the information processing device, and deforms the image information using the information on the estimated yaw angle so as to be at a position facing the photographing device.

2. The information processing system according to claim 1, wherein

the correction processing unit
converts distance information to an arbitrary point in a photographing object into three-dimensional information, rotates the point on a basis of the information on the pitch angle and the roll angle, and calculates a regression line of a point group when the point group including the point is projected on a two-dimensional plane to estimate the information on a yaw angle.

3. The information processing system according to claim 2, wherein

the correction processing unit
divides an object plane on which the photographing object is photographed into a matrix having a predetermined size,
extracts distance information of the point in each matrix, and
converts the extracted distance information at the point into three-dimensional information, rotates the point on the basis of the information on the pitch angle and the roll angle, and calculates a regression line of a point group when the point group including the point is projected on a two-dimensional plane to estimate the information on the yaw angle.

4. The information processing system according to claim 1, wherein

the correction processing unit
changes a weighting of a point near an end portion of an object plane on which the photographing object is photographed to a weighting lower than a weighting of a point near a center, and calculates the regression line.

5. The information processing system according to claim 4, wherein

the correction processing unit
divides an acquisition section of the point group in a predetermined axial direction of the object plane, and
changes a weighting of the number of points in an outer section.

6. The information processing system according to claim 5, wherein

the correction processing unit divides an acquisition section of the point group in a predetermined axial direction of the object plane, and changes a weighting of the number of points as being positioned at an outer edge portion in the outer section.

7. An information processing program causing an information processing device to function as:

an image information input acceptance processing unit that accepts an input of image information to be corrected; a sensor information input acceptance processing unit that accepts an input of information on a pitch angle and a roll angle of a photographing device or the information processing device and distance information to an arbitrary point in a photographing object; a correction processing unit that performs correction processing on the image information; and an output processing unit that outputs the image information on which the correction processing has been performed, wherein the correction processing unit calculates a regression line of a point group including a plurality of the points by using the distance information and the information on the pitch angle and the roll angle, and estimates information on a yaw angle of the photographing device or the information processing device, and deforms the image information using the information on the estimated yaw angle so as to be at a position facing the photographing device.

| IMAGE INFORMATION INPUT ACCEPTANCE PROCESSING UNIT | SENSOR INFORMATION INPUT ACCEPTANCE PROCESSING UNIT | OUTPUT PROCESSING UNIT |
|---|---|---|
| 20 | 22 | 24 |
| IMAGE INFORMATION STORAGE UNIT | CORRECTION PROCESSING UNIT | |
| 21 | 23 | |

PORTABLE COMMUNICATION TERMINAL 2

INFORMATION PROCESSING SYSTEM 1

Fig.1

| ANGLE ESTIMATION PROCESSING UNIT | IMAGE DEFORMATION PROCESSING UNIT |
|---|---|
| 230 | 231 |

CORRECTION PROCESSING UNIT 23

Fig. 2

EP 4 664 392 A1

STORAGE DEVICE 71

INPUT DEVICE 73

PHOTOGRAPHING DEVICE 75

ARITHMETIC DEVICE 70

DISPLAY DEVICE 72

COMMUNICATION DEVICE 74

SENSOR DEVICE 76

Fig. 3

11

START

ACCEPT INPUT OF IMAGE
INFORMATION/SENSOR INFORMATION — S100

CONVERT DISTANCE INFORMATION INTO
POINT GROUP IN THREE-DIMENSIONAL SPACE — S110

ROTATE POINT GROUP USING ROLL ANGLE AND
PITCH ANGLE AT TIME OF PHOTOGRAPHING — S120

MAP POINT GROUP ON HORIZONTAL PLANE
AND PERFORM ROBUST ESTIMATION — S130

CONVERT INCLINATION OF REGRESSION
LINE INTO YAW ANGLE — S140

SET CONE REPRESENTING ANGLE OF VIEW AND
VERTICAL PLANE FACING PHOTOGRAPHING DEVICE — S150

ROTATE CONE USING LOW ANGLE, PITCH
ANGLE, AND YAW ANGLE — S160

OBTAIN CROSS SECTION BY CUTTING CONE
ALONG VERTICAL PLANE AS TARGET QUADRANGLE — S170

PERFORM PROJECTIVE TRANSFORMATION OF RECEIVED
IMAGE INFORMATION INTO TARGET QUADRANGLE — S180

END

Fig.4

Fig. 5

ROLL θ

z

YAW λ

y

PITCH φ

x

PHOTOGRAPHING DEVICE ETC.

OBJECT PLANE OF PHOTOGRAPHING OBJECT

Fig. 6

Fig. 7

Fig. 8

Fig. 9

Fig. 10

Fig. 11

VERTICAL PLANE FACING CAMERA

REPRESENTING ANGLE OF VIEW OF CAMERA

ROLL

OPTICAL AXIS

PITCH

YAW

Fig. 12

(a)

DISTANCE
MEASURING POINT
(ONLY ONE COLUMN)

ARRANGE DISTANCE INFORMATION TO DISTANCE MEASURING POINT IN THREE-DIMENSIONAL SPACE
(TOP VIEW)

BACKWARD

(b)

CANDIDATE OF REGRESSION LINE HAVING HIGH
EVALUATION BY RANSAC

FORWARD

MATRIX

Fig.13

Fig.14

(a)

DISPLAY SHELF OF ORIGINAL
PHOTOGRAPHING TARGET

PROTRUDING FORWARD

(b)

1.000

0.800

REGION WHERE ABNORMAL
VALUES APPEAR FREQUENTLY

EP 4 664 392 A1

WEIGHT OF NUMBER OF POINTS

WEIGHTING OF "NUMBER OF
POINTS" IS REDUCED AS BEING
POSITIONED IN OUTER SIDE

WEIGHTING OF "NUMBER OF
POINTS" IS REDUCED AS BEING
POSITIONED IN OUTER SIDE

Fig.15

EP 4 664 392 A1

## INTERNATIONAL SEARCH REPORT

| International application No. |
| --- |
| **PCT/JP2023/040651** |

| A. | CLASSIFICATION OF SUBJECT MATTER |
| --- | --- |

*G06T 3/18*(2024.01)i
FI:   G06T3/18

According to International Patent Classification (IPC) or to both national classification and IPC

| B. | FIELDS SEARCHED |
| --- | --- |

Minimum documentation searched (classification system followed by classification symbols)

G06T3/00; H04N23/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2020-201846 A (MARKETVISION CO., LTD.) 17 December 2020 (2020-12-17) paragraphs [0036]-[0109], fig. 1-22 | 1-7 |
| A | WO 2014/069632 A1 (MORPHO, INC.) 08 May 2014 (2014-05-08) paragraphs [0024]-[0076], fig. 3-13 | 1-7 |
| A | WO 2017/169186 A1 (SONY CORPORATION) 05 October 2017 (2017-10-05) paragraphs [0015]-[0051], fig. 2-10 | 1-7 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 January 2024** | **30 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/040651**

| Patent document cited in search report | | | Publication date (day/month/year) | Patent family member(s) | | | Publication date (day/month/year) |
|---|---|---|---|---|---|---|---|
| JP | 2020-201846 | A | 17 December 2020 | (Family: none) | | | |
| WO | 2014/069632 | A1 | 08 May 2014 | US | 2015/0123990 | A1 | |
| | | | | paragraphs [0037]-[0101], fig. 3-13 | | | |
| | | | | EP | 2849428 | A1 | |
| | | | | CN | 104247395 | A | |
| | | | | KR | 10-2014-0138947 | A | |
| WO | 2017/169186 | A1 | 05 October 2017 | US | 2019/0087946 | A1 | |
| | | | | paragraphs [0029]-[0065], fig. 2-10 | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018194792 A